# EUROPEAN PATENT APPLICATION

(11) **EP 1 450 360 A1**
(43) Date of publication of application: **25.08.2004**
(21) Application number: 02767982.8
(22) Date of filing: 19.09.2002
(51) Int. Cl.: G11B 7/26

(54) **METHOD AND DEVICE FOR MANUFACTURING OPTICAL RECORDING MEDIUM**

(30) Priority: 27.09.2001 JP 2001295465
(71) Applicant: TDK Corporation, Chuo-ku, Tokyo 103-8272 (JP)
(72) Inventor: KOMAKI, Tsuyoshi, Chuo-ku, Tokyo 103-8272 (JP); USAMI, Mamoru, Chuo-ku, Tokyo 103-8272 (JP); YONEYAMA, Kenji, Chuo-ku, Tokyo 103-8272 (JP)
(74) Representative: HOFFMANN - EITLE
(86) International application number: PCT/JP2002/009653
(87) International publication number: WO 2003/030161

(57) **Abstract**

The method of manufacturing an optical recording medium, according to the present invention, is a method of manufacturing an optical recording medium, in which a resin layer is formed by spin-coating a coating liquid (R) on a substrate (D) having a central portion thereof formed with a central mounting hole (1a), and the method comprises causing a rubber chuck (14) that is capable of being elastically deformed at least in radial directions and thereby closing the central mounting hole of the substrate, to undergo elastic deformation to perform chucking, whereby the substrate (D) is fixed to the turntable (12), and after dropping the coating liquid (R) onto a central portion of the rubber chuck (14), causing the turntable (12) to rotate to thereby spin-coat the coating liquid (R). This makes it possible to reliably and easily form excellent resin layer while enhancing productivity.

## Description

### Technical Field

This invention relates to a method of manufacturing an optical recording medium by forming a resin layer by spin-coating a substrate with a coating liquid, and a recording medium-manufacturing apparatus.

### Background Art

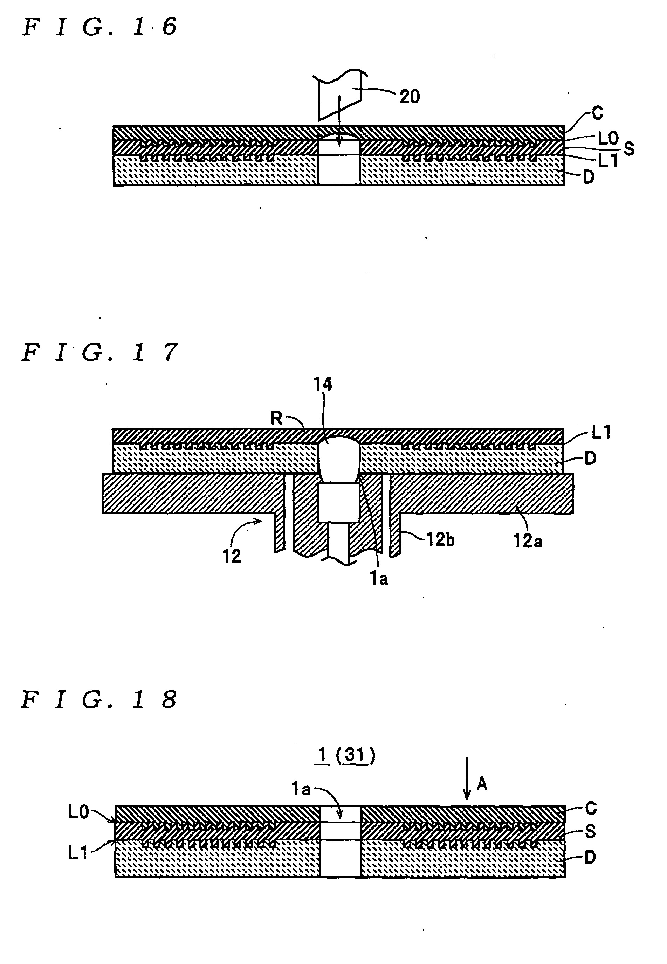

The present applicant has developed a multilayer optical recording medium 31 shown in FIG. 18 as an optical recording medium that is manufactured according to this kind of method of manufacturing an optical recording medium. This multilayer optical recording medium 31 has a recording layer L1, a spacer layer S, a recording layer L0, and a cover layer C sequentially deposited on a disk-shaped substrate D having a central mounting hole 1a formed through a central portion thereof. In this multilayer optical recording medium 31, the recording layer L1 is comprised of a reflective film for reflecting a laser beam set to a recording power and applied for recording and a laser beam set to a reproducing power and applied for reproduction (each of which is hereinafter also simply referred to as "the laser beam" when it is not required to make a distinction between the two laser beams), a phase change film whose optical reflectance is changed with a change in an optical constant caused by application of the laser beam set to the recording power, and a protective film for protecting the phase change film, which are sequentially deposited on grooves and lands formed on a surface of the substrate D. The spacer S is in the form of a thin film made of a light-transmissive resin such that it has a thickness of approximately 20 µm. On the other hand, the recording layer L0 is comprised of a phase change film, a protective film, and the like, sequentially deposited on grooves and lands formed on a surface of the spacer layer S. The cover layer C, which is a layer that not only protects the recording layer L0 from being scratched, but also functions as a part of an optical path (lens), is in the form of a thin film made of a light-transmissive resin. In the multilayer optical recording medium 31, a laser beam is applied in a direction indicated by an arrow A in FIG. 18, whereby recording of record data in the recording layers L0 and L1 or reading record data from the recording layers L0 and L1 is performed.

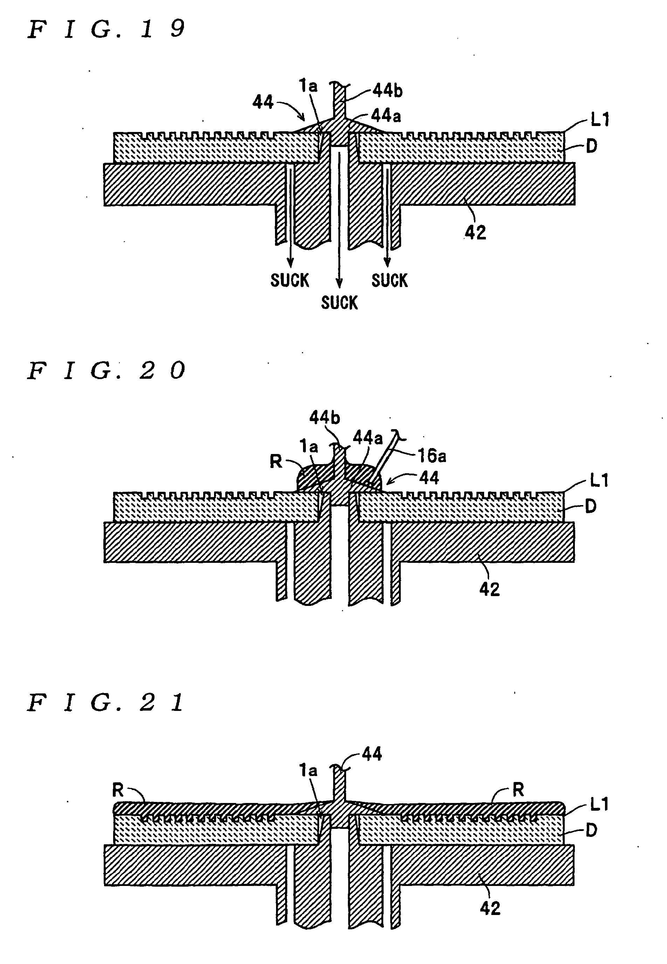

In manufacturing the multilayer optical recording medium 31, first, the recording layer L1 is formed on the substrate D e.g. by the sputtering method. Then, a coating liquid R is applied onto the recording layer L1 by the spin coating method to thereby form the spacer layer S. In doing this, first, the substrate D is placed on a turntable 42, with the surface having the recording layer L1 formed thereon facing upward, as shown in FIG. 19, and then a cover member 44 is placed over the substrate D. In this case, the turntable 42 is in the form of a disk with a flat upper surface. During application of the coating liquid R, the turntable 42 is rotated by a motor, not shown, in a state where the substrate D having its radially innermost portion (chucking area) sucked by negative pressure and the cover member 44 are placed thereon. The cover member 44 includes a cover member body 44a in the form of a disk with a size large enough to cover a central portion of the substrate D where no resin layer is required to be formed, and a holding shaft 44b erected on a central portion of the cover member body 44a. This cover member 44 has its cover member body 44a umbrella-shaped in side view and is sucked by the turntable 42 together with the substrate D, whereby the lower surface thereof is brought into intimate contact with the substrate D.

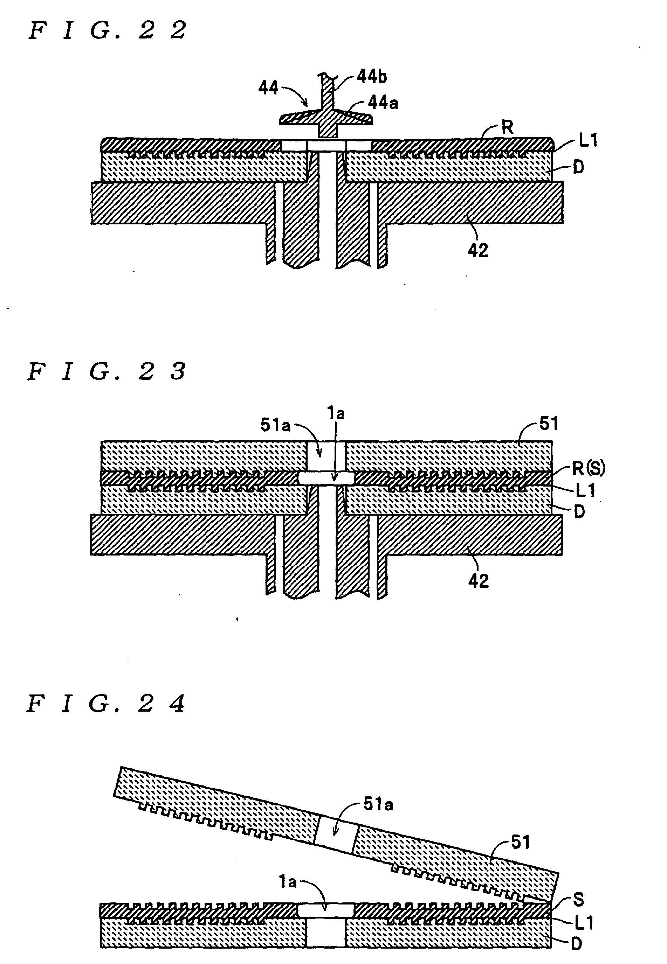

Next, the coating liquid R is dropped onto the upper surface of the cover member body 44a of the cover member 44 from the tip of a nozzle 16a, as shown in FIG. 20, with the turntable 42 in the above-described state being rotated at a low speed. Then, the turntable 42 is rotated at a high speed to cause the coating liquid R on the cover member 44 to spread over the substrate D. In doing this, the rotational speed of the turntable 42 and a time period for maintaining high-speed rotation of the same are controlled as required, whereby the coating liquid R is radially moved from the cover member 44 onto the substrate D by centrifugal force generated by the rotation of the turntable 42. The coating liquid R having moved onto the substrate D further moves on the surface of the substrate D toward the outer periphery of the same. In the meantime, excess part of the coating liquid R having reached the outer periphery of the substrate D flies off the substrate D by the centrifugal force acting thereon. As a result, the entire surface of the substrate D is coated with a thin and substantially even film of coating liquid R as shown in FIG. 21. Then, the holding shaft 44b is sandwiched and moved upward, whereby the cover member 44 is removed from the substrate D, as shown in FIG. 22.

Next, as shown in FIG. 23, a stamper 51 is placed over the substrate D coated with the coating liquid R. In this case, the stamper 51 is formed of a material capable of transmitting ultraviolet rays for curing the coating liquid R as described hereinafter and has a central hole 51a formed through a central portion thereof. Further, the stamper 51 has a lower surface thereof subjected to treatment for forming asperities, such as grooves and lands, for the recording layer L0. Immediately after the application of the coating liquid R over the substrate D has been completed, the coating liquid R still has fluidity. Therefore, when the stamper 51 is placed over the coating liquid R, the coating liquid R conforms to the asperities of the stamper 51, i.e. the shapes of the grooves and the lands. Then, ultraviolet rays are applied to the substrate D in the above-mentioned state to cure the coating liquid R, whereby the spacer layer S is completed. Subsequently, the stamper 51 is removed as shown in FIG. 24. Thereafter, the recording layer L0 is formed on the spacer layer S, and then the cover layer C is formed by spin-coating the recording layer L0 with a resin and curing the resin on the recording layer L0. Thus, the manufacturing of the multilayer optical recording medium 31 is completed.

### Disclosure of the Invention

From the study of the above described method of manufacturing an optical recording medium, the present inventors found out the following points for improvement: In this manufacturing method, the cover member 44 made of metal is used when spin-coating the coating liquid R, and therefore there is a problem that the surface of the cover member 44 is prone to scratches. Further, when the surface is scratched, the coating liquid R is dropped thereon such that the liquid R covers the scratches, there is a fear that air bubbles are mixed into the spacer layer S or a non-uniform coating is caused, due to the scratches. Further, the coating liquid R adheres to the surface of the cover member 44 in its dried state, it is troublesome to carry out the replacement work of the cover member 44 and cleaning work for removing the coating liquid R from the cover member 44, so that there is a fear of degraded productivity of the spin-coating process and hence the increased cost of the multilayer optical recording medium 31. Therefore, improvement in these points is preferable.

Further, in the manufacturing method of the multiplayer optical recording medium 31, due to the use of the stamper 51 formed with the central hole 51a, when the stamper 51 is placed over the substrate D having the coating liquid R applied thereto, the coating liquid R sometimes leaks via the central hole 51a onto the upper surface of the stamper 51, so that there is a fear of reduced coating thickness due to the leakage. Therefore, improvement in this point is preferable.

On the other hand, Japanese Laid-Open Patent Publication (Kokai) Hei No. 10-249264 discloses a method of spin-coating a UV curable resin using a rotary disk (8) composed of a central shaft (8a) inserted into the central hole (central mounting hole) of the recording medium and a disk (8b) formed to have a size large enough to cover the central hole. In this method, differently from the cover member 44, the holding shaft 44b does not exist on the upper surface of the disk (8b), which makes it possible to drop the UV curable resin onto the central portion of the disk (8b), and hence it is possible to form a resin layer having a uniform thickness from the radially innermost portion to the radially outermost portion. In this method, however, when the application of the UV curable resin is completed, the entire upper surface of the disk (8b) is covered with the UV curable resin. Therefore, when the disk (8b) is held and lifted by a sandwiching mechanism, the sandwiching mechanism is stained by the UV curable resin, so that there is a problem that it is troublesome to clean the sandwiching mechanism.

The present invention has been made to solve the above described problems, and a main object thereof is to provide a method of manufacturing an optical recording medium, and an optical recording medium-manufacturing apparatus, which are capable of reliably and easily forming an excellent resin layer while enhancing productivity.

The method of manufacturing an optical recording medium, according to the present invention, is a method of manufacturing an optical recording medium, in which a resin layer is formed by spin-coating a coating liquid over a substrate having a central portion thereof formed with a central mounting hole, and the method comprises causing a central chuck which is capable of undergoing elastic deformation at least in radial directions and thereby closing the central mounting hole of the substrate, to undergo elastic deformation to perform chucking, whereby the substrate is fixed to a turntable, and after dropping the coating liquid onto a central portion of the central chuck, causing the turntable to rotate to thereby spin-coat the coating liquid.

In this method of manufacturing an optical recording medium, the central chuck is caused to undergo elastic deformation within the central mounting hole to perform chucking to thereby fix the substrate to the turntable, and after dropping the coating liquid on a central portion of the central chuck, the turntable is caused to rotate to thereby spin-coat the coating liquid. Differently from a method using a jig, such as a rotary disk or a cover member, the method according to the invention makes it possible to dispense with troublesome operations of mounting and removing a jig and cleaning. As a result, it is possible to reliably and easily manufacture an optical recording medium which has a resin layer with a uniform thickness, while enhancing productivity.

In this case, it is preferred that in fixing the substrate to the turntable, the central chuck is caused to protrude from the turntable such that the periphery of the upper surface of the central chuck is at a level comparable to a level of the rim of the central mounting hole of the substrate. In this case, the term "a level comparable to" is intended to mean that the periphery of the upper surface of the central chuck is at a level equal to or approximately equal to the level of the rim of the central mounting hole of the substrate. That is, it is most preferable that these are at the same level, but considering the manufacturing accuracy and mounting accuracy of the central chuck, it is difficult to define these levels as a completely same level. Therefore, it is preferable that the level or height of the central chuck is subjected to fine adjustment so as to set the central chuck at the equal level. In this sense, the term "a level comparable to" is a notion allowing for some error in a vertical direction. Further, the central portion of the upper surface of the central chuck may either protrude or be recessed from the periphery thereof. This makes it possible to cause the coating liquid dropped onto the central portion of the upper surface of the central chuck to smoothly flow out onto the substrate, with the result that a resin layer having a more uniform thickness can be formed.

Further, it is preferred that the resin layer is formed by dropping an energy radiation-curable resin onto a central portion of the central chuck, and after spin-coating the energy radiation-curable resin, irradiating the substrate with an energy radiation. In this case, the energy radiation includes ultraviolet rays and an electron beam (electrobeam). This makes it possible to form the resin layer in a shorter time period compared with a method using a thermosetting resin which is cured by application of heat. As a result, it is possible to sufficiently reduce the manufacturing costs of the optical recording medium.

Further, after completion of spin-coating of the coating liquid, the stamper is placed over the substrate, and the coating liquid is cured in the resulting state to thereby form asperities in the substrate. This makes it possible to form grooves and lands as asperities on the resin layer having a uniform thickness with accuracy.

Further, it is preferred that an energy radiation-curable resin is employed as the coating liquid, and as the stamper, there is used a stamper formed of an energy radiation-transmitting material. This makes it possible to cure the energy radiation-curable resin by applying the energy radiation via the stamper. Therefore, it is possible to form the resin layer in a shorter time period compared with a method using a thermosetting resin which is cured by application of heat. As a result, it is possible to sufficiently reduce the manufacturing costs of the optical recording medium.

The method of manufacturing an optical recording medium, according to the present invention, is a method of manufacturing an optical recording medium, by forming N recording layers (N is a natural number equal to or larger than 2) deposited, with a resin layer sandwiched therebetween, on a substrate having a central portion thereof formed with a central mounting hole, wherein in forming the resin layer between an (M+1)-th recording layer (M is a natural number equal to or smaller than (N-1)) and an M-th recording layer, as counted from an incident direction of a laser beam to be applied during reproduction or a laser beam to be applied during recording, a central chuck which can undergo elastic deformation at least in radial directions to close the central mounting hole of the substrate is caused to undergo elastic deformation to perform chucking to thereby fix the substrate having the (M+1)-th recording layer formed thereon on a turntable; after a coating liquid for forming the resin layer is dropped onto a central portion of the central chuck, placing the stamper for forming the M-th recording layer over the substrate; and then the turntable is caused to rotate to thereby spin-coat the coating liquid.

In this method of manufacturing an optical recording medium, in forming the resin layer between an (M+1)-th recording layer (M is a natural number equal to or smaller than (N-1)) and an M-th recording layer, chucking is performed using the central chuck to thereby fix the substrate having the (M+1)-th recording layer formed thereon to the turntable, and after a coating liquid for forming the resin layer is dropped onto a central portion of the central chuck, the stamper for forming the M-th recording layer is placed over the substrate and then the turntable is caused to rotate to thereby spin-coat the coating liquid. This makes it possible to prevent intrusion of air bubbles when the stamper is placed on the substrate or when the coating liquid is subjected to spin-coating. As a result, it is possible to perform volume production of non-defective optical recording media without using an expensive equipment, such as a vacuum chamber. Further, since the substrate and the stamper can be held in parallel with each other by centrifugal force, it is possible to make the coating thickness of the coating liquid more uniform.

In this case, the resin layer is formed by dropping an energy radiation-curable resin as the coating liquid onto a central portion of the central chuck, and after placing a stamper made of an energy radiation-transmitting material, as the stamper, over the substrate, spin-coating the energy radiation-curable resin, and irradiating the substrate with an energy radiation. This makes it possible to form the resin layer in a shorter time period compared with a method using a thermosetting resin which is cured by application of heat. As a result, it is possible to sufficiently reduce the manufacturing costs of the optical recording medium.

Further, it is preferred that as the stamper, there is employed a stamper of a no-hole type which does not have a hole communicating a coating liquid-opposed surface thereof which is opposed to a surface of the substrate on which the coating liquid is applied, with a back surface thereof opposite to the coating liquid-opposed surface. This makes it possible to prevent the coating liquid applied over the substrate from leaking onto the upper surface of the stamper, and therefore, it is possible to reliably form the resin layer to a target coating thickness.

Further, it is preferred that after forming the resin layer, the central mounting hole is punched through a central portion of the resin layer. In this case, punching may be performed on the resin layer either from the front side or the back side. However, it is preferable to perform punching from a direction in which the thickness of the optical recording medium is not changed by burrs produced during punching. This makes it possible to reliably and easily form the central mounting hole.

The optical recording medium-manufacturing apparatus, according to this invention, is an optical recording medium-manufacturing apparatus for forming the resin layer according to the method of manufacturing an optical recording medium as described above, and the optical recording medium-manufacturing apparatus comprises a turntable on which the substrate is placed, a central chuck which has a diameter smaller than a diameter of the central mounting hole of the substrate and is expanded by supply of air during chucking, to close the central mounting hole, an air supply section that supplies air to the central chuck, a coating liquid-dropping section which drops the coating liquid for forming the resin layer, and a control section which controls driving of the air supply section and the coating liquid-dropping section.

This optical recording medium-manufacturing apparatus comprises the turntable, the central chuck which is expanded by supply of air during chucking to close the central mounting hole, the air supply section which supplied air to the central chuck, and the coating liquid-dropping section which drops the coating liquid for forming the resin layer, and the control section which controls driving of the air supply section and the coating liquid-dropping section. Therefore, differently from an apparatus using a jig, such as a rotary disk or a cover member, the apparatus according to the present invention makes it possible to dispense with troublesome operations of mounting and removing a jig and cleaning. As a result, it is possible to reliably and easily manufacture an optical recording medium which has a resin layer with a uniform thickness, while enhancing productivity. Further, it is possible to prevent intrusion of air bubbles when the stamper is placed on the substrate or when the coating liquid is subjected to spin-coating, in the case of forming the resin layer during manufacturing of an optical recording medium. As a result, it is possible to perform volume production of non-defective optical recording media.

In this case, it is preferred that the central chuck is made of a material whose surface has water repellency or oil repellency. Here, by subjecting the surface of the material for the central chuck to fluorine treatment or silicone treatment, the surface can be provided with water repellency or oil repellency. With this configuration, after application of coating liquid is completed, it is possible to easily remove the substrate from the turntable, so that it is possible to further reduce the manufacturing costs of the optical recording medium.

Further, it is preferred that the optical recording medium-manufacturing apparatus comprises punching means for punching the central mounting hole through a central portion of the formed resin layer. With this arrangement, it is possible to reliably and easily form the central mounting hole.

It should be noted that the present disclosure relates to the subject matter included in Japanese Patent Application No. 2001-295465 filed on September 27, 2001, and it is apparent that all the disclosures therein are incorporated herein by reference.

### Brief Description of Drawings

FIG. 1 is a block diagram showing the configuration of a coating apparatus 11 according to an embodiment of the present invention;
FIG. 2 is a perspective view of the appearance of a turntable 12 of the coating apparatus 11;
FIG. 3 is a side cross-sectional view of a state of a substrate D having been placed on the turntable 12;
FIG. 4 is a side cross-sectional view of a state of a rubber chuck 14 being expanded for fixture and having a coating liquid R dropped onto a central portion of the rubber chuck 14;
FIG. 5 is a side cross-sectional view of a state of a stamper 21 having been placed over the substrate D in the FIG. 4 state;
FIG. 6 is a side cross-sectional view of a state of the stamper 21 placed over the substrate D where a center and its vicinity of the lower surface of the stamper 21 and the coating liquid R are in contact with each other;
FIG. 7 is a side cross-sectional view of a further downward pushed state of the stamper 21 in the FIG. 6 state;
FIG. 8 is a side cross-sectional view of a state of the coating liquid R having been spread toward the outer periphery of the substrate D by centrifugal force generated by rotation of the turntable 12;
FIG. 9 is a side cross-sectional view of a state of the coating liquid R between the substrate D and the stamper 21 having reached the outer periphery of the substrate D;
FIG. 10 is a side cross-sectional view of a state of a rubber chuck 14 having returned (shrunk) to its original state after stoppage of air supply;
FIG. 11 a side cross-sectional view of a punching cutter 20 being inserted along a wall surface of a central mounting hole 1a of the punching cutter 20;
FIG. 12 is a side cross-sectional view of a state of the stamper 21 having been removed from the substrate D having a spacer layer S formed thereon;
FIG. 13 is a side cross-sectional view of a state of the substrate having a recording layer L0 formed thereon being placed on the turntable 12;
FIG. 14 is a side cross-sectional view of a state of a rubber chuck 14A being expanded for fixture and having a coating liquid R dropped onto a central portion of the rubber chuck 14A;
FIG. 15 is a side cross-sectional view of a state of a cover layer C of the coating liquid R1 being formed on the recording layer L0;
FIG. 16 is a side cross-sectional view of a state of the cover layer C being punched by the punching cutter 20;
FIG. 17 is a side cross-sectional view of a state of a layer of the coating liquid R being formed on the recording layer L1;
FIG. 18 is a side cross-sectional view of a completely manufactured multilayer optical recording medium 1 (31);
FIG. 19 is a side cross-sectional view of a state of a substrate D and a cover member 44 having been placed on a turntable 42;
FIG. 20 is a side cross-sectional view of a state of a coating liquid R having been dropped onto the cover member 44;
FIG. 21 is a side cross-sectional view of a state of the coating liquid R having reached the outer periphery of the substrate D;
FIG. 22 is a side cross-sectional view of a state of the cover member 44 having been removed from the FIG. 21 state;
FIG. 23 is a side cross-sectional view of a state of a stamper 51 having been placed over the substrate D in the FIG. 21 state; and
FIG. 24 is a side cross-sectional view of a state of the stamper 51 having been removed from the substrate D having a spacer layer S formed thereon;

### Best Mode for Carrying Out the Invention

Hereinafter, preferred embodiments of a method of manufacturing an optical recording medium and a recording medium-manufacturing apparatus, according to the present invention, will be described with reference to the accompanying drawings.

First of all, the structure of the multilayer optical recording medium 1 will be described with reference to FIG. 18.

The multilayer optical recording medium 1 is constructed by sequentially depositing a recording layer L1 corresponding to an (M+1)-th (M = 1) recording layer in the present invention, a spacer layer S, a recording layer L0 corresponding to an M-th recording layer (M = 1) in the present invention, and a cover layer C, on a substrate D, such that record data can be read or recorded by applying a laser beam set to a reproducing power or a laser beam set to a recording power, onto the multilayer optical recording medium 1 from a cover layer C side. The substrate D is formed by injection molding such that it is disk-shaped (flat plate-shaped) with a diameter of approximately 120 mm. Further, the substrate D has a central portion thereof formed with a central mounting hole 1a having a diameter of approximately 15 mm, for use when the substrate D is mounted in a recording and reproducing apparatus, and a radially outer portion thereof formed with grooves, lands, and pits for the recording layer L1. The recording layer L1 is formed by forming a reflective film, a phase change film, and a protective film, on the substrate D by the sputtering method. The spacer layer S corresponds to a resin layer in the present invention, and is formed on the recording layer L1 using a light-transmissive coating liquid R, such that it has a thickness of approximately 20 µm. Further, on the surface of the spacer layer S, grooves, lands, and pits for forming the recording layer L0 are formed by a stamper 21, as described hereinafter.

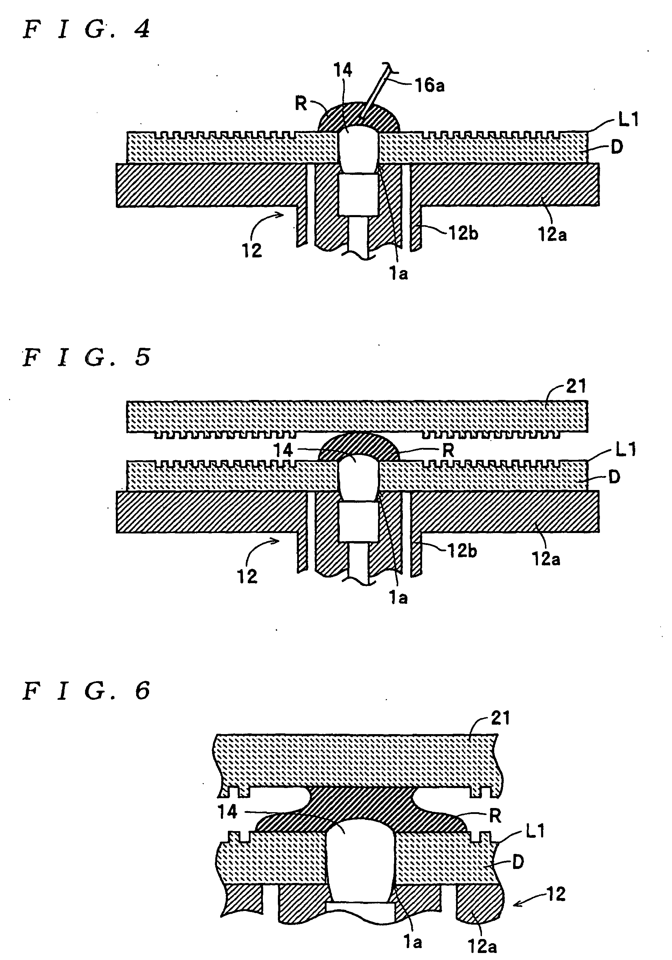

In this case, the stamper 21 is a resin stamper or a glass stamper as a dedicated jig for manufacturing the multilayer optical recording medium 1, which has a surface thereof subjected to water-repelling treatment, such as fluorine treatment or silicone treatment. As shown in FIG. 5, the stamper 21 is in the form of a disk made of a material capable of transmitting ultraviolet rays (energy radiation) for curing the coating liquid R. Further, the stamper 21 has a lower surface thereof subjected to treatment for forming asperities, such as grooves, lands, and pits, for the recording layer L0. In view of releasability from the spacer layer S, it is preferable that of all the surfaces of the spacer 21, at least the surface formed with the grooves, lands, and pits is subjected to surface treatment, such as fluorine treatment, and it is further preferable that the surface is formed of an amorphous cyclic polyolefin resin having an excellent releasability from an energy radiation-curable resin. On the other hand, the recording layer L0 is formed by forming a phase change film and a protective film on the spacer layer S by the sputtering method. The cover layer C corresponds to the resin layer in the present invention, and is formed by using a light-transmissive resin such that it has a thickness of approximately 90 µm. In the present embodiment, a doughnut-shaped chucking area having a width of approximately 10 mm is formed between a recording area (area where the grooves, lands, and pits for the recording layers L0 and L1 are formed) and the rim of the central mounting hole 1a.

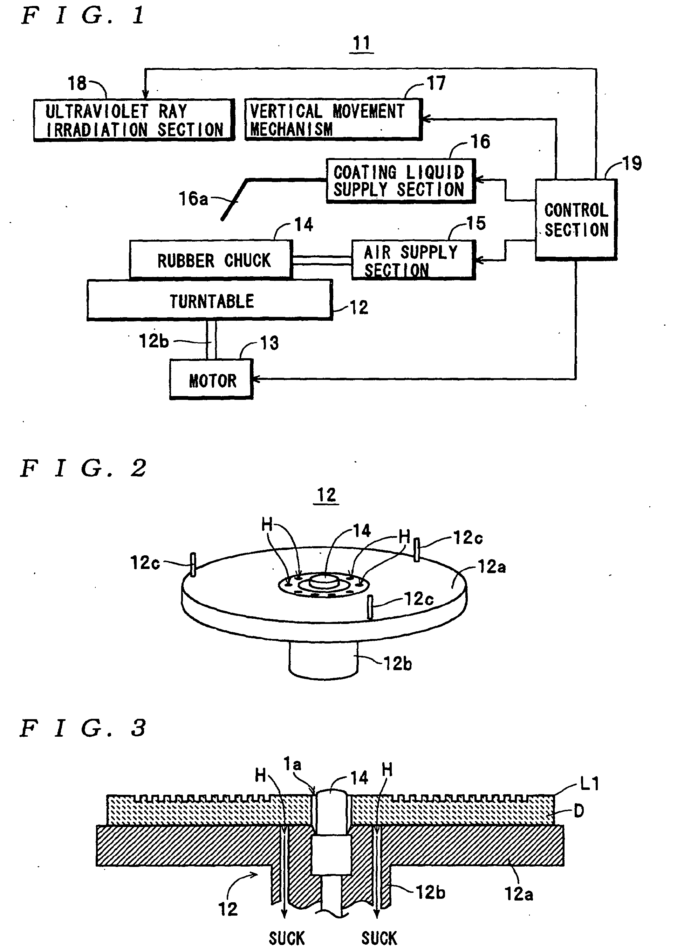

Next, the configuration of the multilayer optical recording medium-manufacturing apparatus for manufacturing an optical recording medium by the method of manufacturing an optical recording medium, according to the present invention, will be described with reference to FIGS. 1 to 3.

The coating apparatus 11, which is the optical recording medium-manufacturing apparatus according to the present invention, forms the spacer layer S by applying the coating liquid R onto the substrate D and then curing the same, when the multilayer optical recording medium 1 is manufactured. The coating apparatus 11 is comprised of a turntable 12, a motor 13, a rubber chuck 14, an air supply section 15, a coating liquid supply section 16, a vertical movement mechanism 17, an ultraviolet ray irradiation section 18 and a control section 19. As shown in FIG. 2, the turntable 12 is comprised of a disk-shaped base 12a having a flat upper surface on which the substrate D can be placed, and a shaft 12b connected to the center of the lower surface of the base 12a and connected to the rotary shaft of the motor 13. Further, three guide pins 12c, 12c, and 12c are erected on the outer edge of the base 12a, for positing the substrate D and the stamper 21. The guide pins 12c are brought into contact with the substrate D and the stamper 21 placed on the base 12a, thereby positioning the respective central portions of the substrate D and the stamper 21 to the central portion of the turntable 12 while allowing some degree of motion of the substrate D and the stamper 21. It should be noted that in the other figures than FIG. 2, the guide pins 12c are omitted from illustration. Also, it should be noted that the turntable 12 is not limited to the configuration in which the upper surface thereof is flat, but may be configured such that protuberances are formed on the respective radially innermost and outermost portions of the upper surface of the turntable 12 along the circumference thereof such that the substrate D can be placed on the protuberances, to thereby prevent the substrate D from being scratched by contact or otherwise. Further, the turntable 12 has a plurality of suction ports H, H, ..., formed at respective locations opposed to the chucking area of the substrate D. Accordingly, when the coating liquid R is applied, air below the substrate D is sucked by an air pump (not shown) via the suction ports H, H,..., whereby the substrate D is attracted toward the turntable 12. It should be noted that since the air pump for sucking the substrate D is known, illustration in figures and detailed description thereof are omitted.

The motor 13 is controllably driven by the control section 19 to rotate the turntable 12. The rubber chuck 14, which corresponds to a central chuck in the present invention, is mounted in the central portion of the base 12a of the turntable 12. In the present embodiment, the rubber chuck 14 is in the form of a hollow cylinder having a slightly smaller diameter than the central mounting hole 1a of the substrate D, as shown in FIG. 3, such that it can close the central mounting hole 1a of the substrate D by being elastically deformed. Further, the rubber chuck 14 is formed to have a height approximately equal to the thickness of the substrate D. Further, the upper surface of the rubber chuck 14 is formed to have a semispherical shape protruding upward, such that as described hereinafter, when the coating liquid R is dropped thereon, the coating liquid R smoothly flows therefrom onto the substrate D. It should be noted that the central portion of the upper surface of the rubber chuck 14 may be recessed with respect to the periphery of the upper surface of the rubber chuck 14. Further, the rubber chuck 14 is formed of silicone rubber from which the coating liquid R or the like can be easily separated. However, this is not limitative, but a chuck may be formed e.g. of a resin material whose surface has water or oil repellency, in place of the rubber chuck 14. When air is supplied by the air supply section 15, the rubber chuck 14 is expanded and the peripheral surface thereof comes into contact with the rim of the central mounting hole 1a to close the central mounting hole 1a, thereby fixing the substrate D such that the central portion of the substrate D is positioned in the central portion of the turntable 12. Further, the rubber chuck 14 is replaceably mounted on the base 12a. Therefore, by replacing the rubber chuck 14, as required, to prevent occurrence of a trouble, such as coating non-uniformity or generation of air bubbles, due to a scratch or the like formed on the rubber chuck 14 due to some cause or other, it is possible to stabilize the quality of a coating process for applying the coating liquid R, and hence the quality of the multilayer optical recording medium 1. Furthermore, the replacement frequency is lower compared with the cover member 44, so that it is possible to reduce the cost of the coating process.

On the other hand, the air supply section 15 supplies air to the rubber chuck 14 under the control of the control section 19. The coating liquid supply section 16, which forms a coating liquid-dropping section in the present invention together with the nozzle 16a, drops the coating liquid R for forming the spacer layer S onto the substrate D via the nozzle 16a under the control of the control section 19. In this process, the nozzle 16a is moved vertically upward and downward with respect to the substrate D by a vertical movement mechanism, not shown. The vertical movement mechanism 17 places the stamper 21 on the substrate D under the control of the control section 19. The ultraviolet ray irradiation section 18 applies ultraviolet rays onto the substrate D under the control of the control section 19 to thereby cure the coating liquid R having applied over the surface of the substrate D. The control section 19 controllably drives the motor 13, the air supply section 15, the coating liquid supply section 16, and the ultraviolet ray irradiation section 18.

Next, the method of manufacturing the multilayer optical recording medium 1 will be described with reference to drawings.

First, the recording layer L1 is formed on the substrate D e.g. by the sputtering method. Then, the spacer layer S is formed by applying the coating liquid R onto the recording layer L1. More specifically, first, the substrate D is placed on the turntable 12 with the surface having the recording layer L1 formed thereon facing upward, as shown in FIG. 3. In doing this, the rubber chuck 14 is inserted through the central mounting hole 1a of the substrate D. In this case, since the rubber chuck 14 is formed to have a hollow cylindrical shape having a smaller diameter than the central mounting hole 1a of the substrate D as described above, it is easy to insert the rubber chuck 14 through the central mounting hole 1a. Then, the air supply section 15 supplies air to the rubber chuck 14 under the control of the control section 19, whereby the rubber chuck 14 is expanded (see FIG. 4). At this time, the peripheral surface of the expanded rubber chuck 14 and the rim of the central mounting hole 1a of the substrate D come into contact with each other, whereby the substrate D is fixed in a state where the central portion thereof is positioned in the central portion of the turntable 12. Further, under this condition, the periphery of the upper surface of the rubber chuck 14 is at a level substantially equal to that of the rim of the central mounting hole 1a of the substrate D. Then, the control section 19 drives the air pump, not shown, whereby the substrate D is sucked toward the turntable 12. Thus, the substrate D is fixed onto the turntable 12 by the rubber chuck 14 and the air pump.

Next, the control section 19 controllably drives the motor 13 to thereby cause the turntable 12 to rotate at a rotational speed e.g. of approximately 50 rpm. Then, the control section 19 causes the nozzle 16a to move downward and controllably drives the coating liquid supply section 16 to supply the coating liquid R to the nozzle 16a. At this time, the tip of the nozzle 16a is positioned above the central portion of the rubber chuck 14, i.e. to a location from which the coating liquid R can be dropped onto the central portion of the substrate D. Then, due to the supply of the coating liquid R by the coating liquid supply section 16, the coating liquid R is dropped from the tip of the nozzle 16a onto the rubber chuck 14, as shown in FIG. 4. At this time, the coating liquid R has some degree of viscosity, and hence, immediately after being dropped from the nozzle 16a, the coating liquid R is positioned at the central portion of the substrate D such that the coating liquid R covers the entire rubber chuck 14. In this case, due to surface tension acting on the coating liquid R, the coating liquid R is made semispherical in side view.

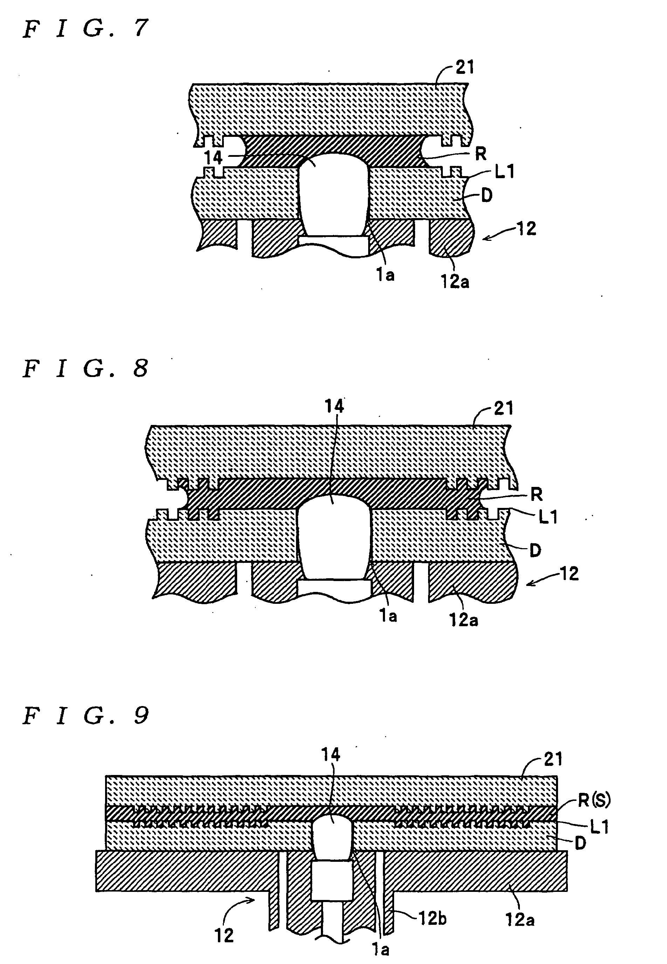

Then, after causing the nozzle 16a to move upward, the control section 19 controllably drives the vertical movement mechanism 17 to place the stamper 21 on the substrate D, as shown in FIG. 5. In doing this, the vertical movement mechanism 17 moves the stamper 21 downward along the guides of the guide pins 12c, 12c, and 12c, while positioning the stamper 21 such that the central portion of the stamper 21 is immediately above the central portion of the turntable 21, i.e. the central portion of the rubber chuck 14. In doing this, as described hereinbefore, since the coating liquid R has a semispherical shape, first, as shown in FIG. 5, the coating liquid R on the rubber chuck 14 and the underside surface of the stamper 21 are brought into point contact with each other, and then, as shown in FIG. 6, they are brought into surface contact due to the downward motion of the coating liquid R pressed downward by the stamper 21. This prevents air bubbles from intruding between the stamper 21 and the coating liquid R when the stamper 21 and the coating liquid R come into contact with each other. Further, as the stamper 21 is further pushed downward, the coating liquid R is gradually spread toward the outer periphery of the substrate D while conforming to the lower surface of the stamper 21, as shown in FIG. 7. Thus, also at this time, the coating liquid R is spread in a state where intrusion of air bubbles between the stamper 21 and the coating liquid R is prevented.

Then, the control section 19 causes the rotational speed of the motor 13 to be increased to thereby increase the rotational speed of the turntable 12 to e.g. approximately 1000 rpm. This increase the centrifugal force applied to the coating liquid R, and hence, as shown in FIG. 8, the coating liquid R is rapidly spread between the substrate D and the stamper 21 toward the outer periphery of the substrate D. In this process, the coating liquid R is rapidly spread (drawn), with an almost circular shape of the outline thereof in plan view being maintained, while conforming to the upper surface of the substrate D and the lower surface of the stamper 21. At this time, in this coating apparatus 11, the rubber chuck 14 is expanded, whereby the rim of the central mounting hole 1a of the substrate D and the peripheral surface of the rubber chuck 14 are in intimate contact with each other. This causes the coating liquid R to be drawn while preventing air invasion from these portions. Further, as the coating liquid R is drawn, the thickness of the coating liquid R is reduced, and hence the stamper 21 performs translation (downward motion) toward the substrate D by the decreased amount of thickness of the coating liquid R. Therefore, by controlling the rotational speed of the motor 13 and the time period for maintaining high-speed rotation of the same, i.e. by controlling a shake-off amount of the coating liquid R, it is possible to accurately control the coating thickness of the coating liquid R (film thickness of the spacer layer S) to a target value. It should be noted that in this case, the substrate D and the stamper 21 are held in parallel with each other by centrifugal force acting on both of them. As a result, as shown in FIG. 9, the coating thickness of the coating liquid R along the circumference of the substrate D becomes uniform.

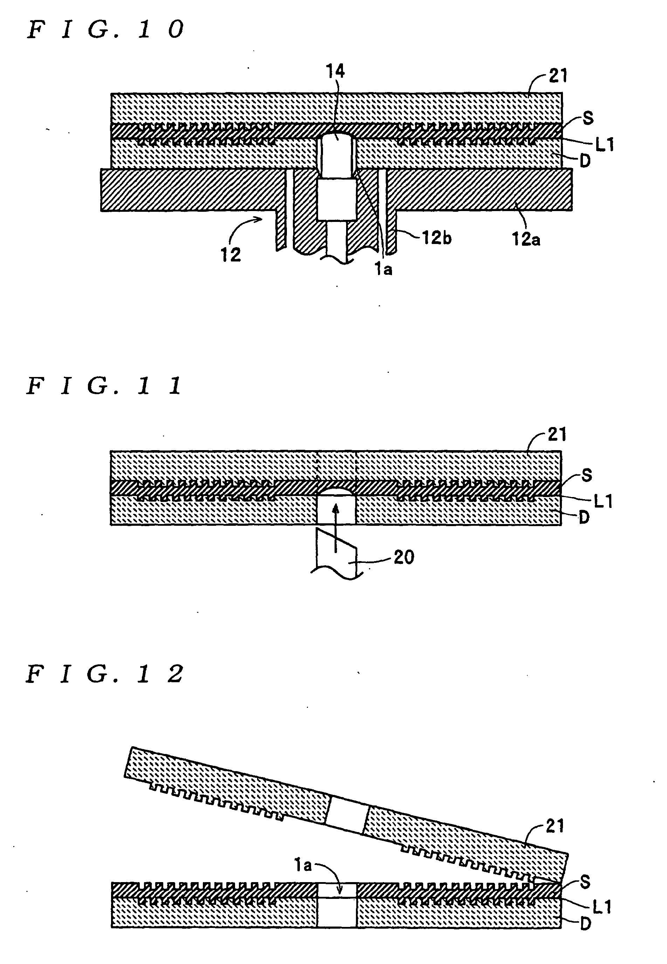

In the meantime, excess part of the coating liquid R having reached the radially outermost portion of the substrate D flies off the substrate D by the centrifugal force acting on the substrate D. As a result, a layer of the coating liquid R almost uniformly applied onto the substrate D from the inner periphery to the outer periphery to the target thickness is formed between the substrate D and the stamper 21. Then, the ultraviolet ray irradiation section 18 irradiates the substrate D with ultraviolet rays under the control of the control section 19. As a result, the coating liquid R is cured by the ultraviolet rays applied through the stamper 21, whereby formation of the spacer layer S is completed. Then, the control section 19 carries out stop control of the motor 13 to stop the rotation of the turntable 12. Subsequently, the control section 19 causes the air supply section 15 to stop the supply of air to the rubber chuck 14. As a result, the rubber chuck 14 shrinks, as shown in FIG. 10, whereby a gap is formed between the periphery of the rubber chuck 14 and the rim of the central mounting hole 1a of the substrate D and between the upper surface of the rubber chuck 14 and the coating liquid R. In this case, since the coating apparatus 11 uses the rubber chuck 14 made of silicone rubber, the coating liquid R in contact with the upper surface of the rubber chuck 14 is easily separated from the rubber chuck 14

Next, after stoppage of the air pump, the substrate D is removed from the turntable 12. In doing this, since the gap is formed between the rubber chuck 14 and the rim of the central mounting hole 1a, the substrate D can be easily removed. Then, as shown in FIG. 11, the punching cutter 20 (corresponding to cutting means) having approximately the same diameter as that of the central mounting hole 1a is inserted along the wall surface of the central mounting hole 1a from the substrate D side, whereby the central portions of the cured coating liquid R and the stamper 21 (portions indicated by broken lines in FIG. 11) are punched. In doing this, it is possible to prevent burrs from being produced at the lower surface of the substrate D by inserting the punching cutter 20 from the substrate D side. It should be noted that it is also possible to punch the cured coating liquid R (spacer layer S) together with the cover layer C, without carrying out the punching at this time, as will be described hereinafter. Then, after the substrate D is removed from the stamper 21, the recording layer L0 is formed on the spacer S, as shown in FIG. 12.

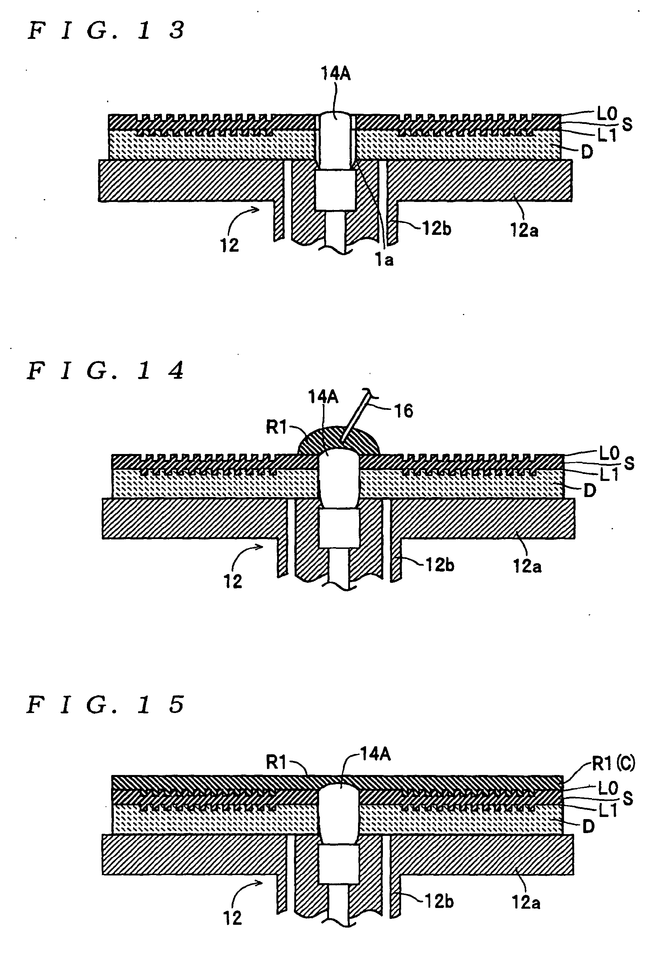

Then, as shown in FIG. 13, the substrate D is placed on the turntable 12 while having the rubber chuck 14A inserted into the central mounting hole 1a thereof, with its surface facing upward on which the recording layer L0 is formed. Thereafter, by spin-coating the coating liquid R1 on the recording layer L0 and curing the same, the cover layer C is formed. It should be noted that this spin-coating process is carried out in the same manner as carried out on the spacer layer S, except that the periphery of the upper surface of the rubber chuck 14A is set to approximately at same level as that of the rim of the central mounting hole 1a of the substrate D on which the recording layer L0 has been formed. Therefore, the following description will be given mainly of different points of this spin-coating process from that carried out on the spacer layer S.

In this spin-coating process, first, air is supplied to the rubber chuck 14A to expand the same, and then, as shown in FIG. 14, the coating liquid R1 is dropped onto the rubber chuck 14A from the tip of the nozzle 16a. Then, the control section 19 causes the nozzle 16a to move upward, and then causes the turntable 12 to rotate at an increased rotational speed. In doing this, since the periphery of the upper surface of the rubber chuck 14A is maintained substantially at the same level as that of the rim of the central mounting hole 1a of the substrate D, the coating liquid R smoothly flows onto the substrate D. As a result, as shown in FIG. 15, there is formed a layer of the coating liquid R1 uniformly applied on the substrate D to a target thickness from the radially innermost portion to the radially outermost portion thereof. Then, the ultraviolet ray irradiation section 18 irradiates the substrate D with ultraviolet rays, whereby the coating liquid R1 is cured to complete formation of the cover layer C. Then, after stopping the rotation of the turntable 12, the substrate D is removed from the turntable 12. After this, as shown in FIG. 16, the punching cutter 20 is inserted into the central mounting hole 1a from the cover layer C side, whereby the central mounting hole 1a is formed into a through hole. In doing this, since the punching cutter 20 punches the cover layer C from the cover layer C side toward the substrate D, no burrs are produced on the surface on the cover layer C side of the multilayer recording medium 1, which makes it possible to increase the accuracy of the dimensions of the multilayer recording medium 1 and prevent faulty chucking of the medium 1 when it is mounted on the recording and reproducing apparatus. It should be noted that, as described hereinbefore, at this time, it is also possible to punch the cover layer C together with the spacer layer S left un-punched. By simultaneously punching these layers, it is possible to reduce the number of punching processes by one. After going through the processes described above, the manufacturing of the multilayer optical recording medium 1 is completed as shown in FIG. 18.

As described above, according to the coating apparatus 11, the coating liquid R (or coating liquid R1) is dropped on to the central portion of the upper surface of the rubber chuck 14 (rubber chuck 14A), which means that the coating liquid R (or coating liquid R1) is dropped on to a central portion of a body of revolution, so that it is possible to form the spacer layer S (or cover layer C) having a uniform thickness. Further, the coating liquid R dropped is once collected immediately above the rubber chuck 14, i.e. the central portion of the substrate D, in a semispherical form. Therefore, when the stamper 21 is placed over, the coating liquid R is brought into point contact with the central portion of the stamper 21, so that intrusion of air bubbles can be prevented during the placing of the stamper 21. As a result, it is possible to reliably and easily form an excellent spacer S. Further, since the rubber chuck 14 (or rubber chuck 14A) which is expanded by air supply is employed, it is possible to prevent intrusion of air from between the central mounting hole 1a of the substrate D and the rubber chuck 14 (or rubber chuck 14A), and hence prevent mixing of air bubbles into the coating liquid R (or coating liquid R1) also when it is drawn. As a result, expensive equipment for preventing mixing of air bubbles, such as a vacuum chamber, can be dispensed with, which contributes to sufficient reduction of the manufacturing costs of the multilayer optical recording medium 1.

Further, since the rubber chuck 14 capable of undergoing elastic deformation is used, it is hard to be scratched, so that as a result of effective prevention of occurrence of intrusion of air bubbles and non-uniform coating thickness, productivity can be increased. Further, when the coating liquid R is drawn, the substrate D and the stamper 21 are held in parallel with each other by centrifugal force, so that the coating thickness of the coating liquid R can be made uniform in circumferential and radial directions of the substrate D. In addition, since the coating apparatus 11 uses the rubber chuck 14 made of silicone rubber, the coating liquid R is easily separated from the rubber chuck 14, so that it is possible to dispense with the washing operation for removing the coating liquid, which enables productivity to be enhanced and hence reduce the manufacturing costs of the multilayer optical recording apparatus 1.

Further, when the cover layer C is formed, by using the stamper 21 without a hole communicating the front side of the substrate with the reverse side thereof, it is possible to prevent leakage of the coating liquid R applied over the substrate D onto the upper surface of the stamper 21, so that the spacer layer S can be reliably formed to a target coating thickness. Further, since the stamper 21 of no-hole type is used, the stamper 21 is punched together with the spacer layer S when the substrate D is punched by the punching cutter 20, whereby formation of burrs on the upper surface of the spacer layer S (surface toward the cover layer C) can be avoided.

Next, a method of manufacturing the multilayer optical recording medium 1 according to another embodiment of the present invention will be described with reference to the drawings.

The manufacturing method according to this embodiment is distinguished from the above-described manufacturing method in that in forming the spacer layer S, after spin-coating the coating liquid R, the coating liquid is cured in a state covered by the stamper 21. Therefore, the description will be given of different processes from those of the manufacturing method described above.

First, in the state shown in FIG. 4, the nozzle 16a is moved upward, and then the rotation of the turntable 12 is increased. In this case, the periphery of the upper surface of the rubber chuck 14 is set to a level approximately equal to that of the rim of the central mounting hole 1a of the substrate D, so that the coating liquid R smoothly flows out. Therefore, as shown in FIG. 17, a layer of the applied coating liquid R is formed from the radially innermost portion of the substrate D to the radially outermost portion of the same. Then, the ultraviolet rays are applied to the substrate D, whereby the coating liquid R is cured to complete formation of the spacer layer S. Then, as shown in FIG. 9, the stamper 21 is placed on the substrate D, and thereafter the ultraviolet rays are applied to cure the coating liquid R. After this, as shown in FIG. 11, the central portions of the cured coating liquid R and the stamper 21 are punched using the punching cutter 20, followed by removing the stamper 21 from the substrate D, as shown in FIG. 12. Then, the recording layer L0 and the cover layer C are formed on the spacer layer S, to complete the manufacturing of the multilayer optical recording medium 1.

Even with this manufacturing method, by dropping the coating liquid R to the central portion of the upper surface of the rubber chuck 14, the coating liquid R is dropped on to the central portion of a body of revolution, which makes it possible to form the spacer layer (resin layer) having a uniform thickness.

It should be noted that the present invention is by no means limited to the aforementioned embodiment but it can be modified as required. For example, although in the above-described embodiments of the present invention, the method of forming the spacer layer S and the cover layer C during formation of a multilayer optical recording medium has been described by way of example, this is not limitative, but the method of manufacturing the optical recording medium according to the present invention can be applied to formation of various kinds of resin layers. Further, in the above-described embodiment of the present invention, the multilayer recording medium 1 having two recording layers L1 and L0 is described by way of example, this is not limitative, but the method of manufacturing an optical recording medium according to the present invention can be applied to formation of various kinds of resin layers during formation of an optical recording medium having a single recording layer.

Further, as the stamper in the present invention, it is possible to employ a stamper of a hole type formed with a central hole. Further, as the method of punching the central mounting hole 1a, there may be employed other methods, and the direction of punching can be selected as required. Furthermore, although in the embodiment of present invention, the recording layers L0 and L1 each having a phase change film are described by way of example, the recording layers in the present invention are not limited to these, but they may be in the form of recording layers each having a thin film of a dye-based resin, for example. In this case, by forming a thin film of pigment-type resin according to the method of forming a resin layer according to the present invention, it is possible to form a recording layer having a uniform thickness. Further, the present invention can be applied to the manufacturing of a ROM having the recording layers L0 and L1 in which information is recorded in advance by forming pits.

Further, in the above-described embodiments of the present invention, the example in which the rubber chuck 14 made of silicone rubber is employed is described, the central chuck in the present invention is not limited to this, but it can be formed of various materials insofar as they are excellent in separability from the coating liquid R, and elastically deformable, which include fluorine-based materials and polyolefins. Further, in the above described embodiments of the present invention, the example of the rubber chuck 14 which is expanded by air supplied by the air supply section 15 to thereby chuck the substrate D has been described, the central chuck can be formed of a tapered cylindrical rubber having a slightly larger diameter than the central mounting hole 1a. This central chuck makes it possible to chuck the substrate D by its own elasticity.

### Industrial Applicability

As described hereinbefore, the method of manufacturing an optical recording medium, according to the present invention, is a method in which a resin layer is formed by spin-coating a coating liquid over a substrate having a central portion thereof formed with a central mounting hole, and the method comprises causing a central chuck which is capable of undergoing elastic deformation at least in radial directions and thereby closing the central mounting hole of the substrate, to undergo elastic deformation to perform chucking, whereby the substrate is fixed to a turntable, and after dropping the coating liquid onto a central portion of the central chuck, causing the turntable to rotate to thereby spin-coat the coating liquid. Differently from a method using a jig, such as a rotary disk or a cover member, the method according to the invention makes it possible to dispense with troublesome operations of mounting and removing a jig and cleaning. Therefore, there is realized a method of reliably and easily manufacturing an optical recording medium which has a resin layer having a uniform thickness, while enhancing productivity.

## Claims

1. A method of manufacturing an optical recording medium, in which a resin layer is formed by spin-coating a coating liquid over a substrate having a central portion thereof formed with a central mounting hole,
the method comprising causing a central chuck which is capable of undergoing elastic deformation at least in radial directions and thereby closing the central mounting hole of the substrate, to undergo elastic deformation to perform chucking, whereby the substrate is fixed to a turntable, and after dropping the coating liquid onto a central portion of the central chuck, causing the turntable to rotate to thereby spin-coat the coating liquid.

2. A method of manufacturing an optical recording medium, as claimed in claim 1, wherein in fixing the substrate to the turntable, the central chuck is caused to protrude from the turntable such that a periphery of an upper surface of the central chuck is at a level comparable to a level of a rim of the central mounting hole of the substrate.

3. A method of manufacturing an optical recording medium, as claimed in claim 1, wherein the resin layer is formed by dropping an energy radiation-curable resin onto a central portion of the central chuck, and after spin-coating the energy radiation-curable resin, irradiating the substrate with an energy radiation.

4. A method of manufacturing an optical recording medium, as claimed in claim 2, wherein the resin layer is formed by dropping an energy radiation-curable resin onto a central portion of the central chuck, and after spin-coating the energy radiation-curable resin, irradiating the substrate with an energy radiation.

5. A method of manufacturing an optical recording medium, as claimed in claim 1, wherein after completion of spin-coating of the coating liquid, the stamper is placed over the substrate, and the coating liquid is cured in the resulting state to thereby form asperities in the substrate.

6. A method of manufacturing an optical recording medium, as claimed in claim 2, wherein after completion of spin-coating of the coating liquid, the stamper is placed over the substrate, and the coating liquid is cured in the resulting state to thereby form asperities in the substrate.

7. A method of manufacturing an optical recording medium, as claimed in claim 5, wherein an energy radiation-curable resin is employed as the coating liquid, and as the stamper, there is used a stamper formed of an energy radiation-transmitting material.

8. A method of manufacturing an optical recording medium, as claimed in claim 6, wherein an energy radiation-curable resin is employed as the coating liquid, and as the stamper, there is used a stamper formed of an energy radiation-transmitting material.

9. A method of manufacturing an optical recording medium, by forming N recording layers (N is a natural number equal to or larger than 2) deposited, with a resin layer sandwiched therebetween, on a substrate having a central portion thereof formed with a central mounting hole,
wherein in forming the resin layer between an (M+1)-th recording layer (M is a natural number equal to or smaller than (N-1)) and an M-th recording layer, as counted from an incident direction of a laser beam to be applied during reproduction or a laser beam to be applied during recording, a central chuck which can undergo elastic deformation at least in radial directions to close the central mounting hole of the substrate is caused to undergo elastic deformation to perform chucking to thereby fix the substrate having the (M+1)-th recording layer formed thereon on a turntable; after a coating liquid for forming the resin layer is dropped onto a central portion of the central chuck, placing the stamper for forming the M-th recording layer over the substrate; and then the turntable is caused to rotate to thereby spin-coat the coating liquid.

10. A method of manufacturing an optical recording medium, as claimed in claim 9, wherein the resin layer is formed by dropping an energy radiation-curable resin as the coating liquid onto a central portion of the central chuck, and after placing a stamper made of an energy radiation-transmitting material, as the stamper, over the substrate, spin-coating the energy radiation-curable resin, and irradiating the substrate with an energy radiation.

11. A method of manufacturing an optical recording medium, as claimed in claim 5, wherein as the stamper, there is employed a stamper of a no-hole type which does not have a hole communicating a coating liquid-opposed surface thereof which is opposed to a surface of the substrate on which the coating liquid is applied, with a back surface thereof opposite to the coating liquid-opposed surface.

12. A method of manufacturing an optical recording medium, as claimed in claim 7, wherein as the stamper, there is employed a stamper of a no-hole type which does not have a hole communicating a coating liquid-opposed surface thereof which is opposed to a surface of the substrate on which the coating liquid is applied, with a back surface thereof opposite to the coating liquid-opposed surface.

13. A method of manufacturing an optical recording medium, as claimed in claim 9, wherein as the stamper, there is employed a stamper of a no-hole type which does not have a hole communicating a coating liquid-opposed surface thereof which is opposed to a surface of the substrate on which the coating liquid is applied, with a back surface thereof opposite to the coating liquid-opposed surface.

14. A method of manufacturing an optical recording medium, as claimed in claim 10, wherein as the stamper, there is employed a stamper of a no-hole type which does not have a hole communicating a coating liquid-opposed surface thereof which is opposed to a surface of the substrate on which the coating liquid is applied, with a back surface thereof opposite to the coating liquid-opposed surface.

15. A method of manufacturing an optical recording medium, as claimed in claim 1, wherein after forming the resin layer, the central mounting hole is punched through a central portion of the resin layer.

16. A method of manufacturing an optical recording medium, as claimed in claim 9, wherein after forming the resin layer, the central mounting hole is punched through a central portion of the resin layer.

17. An optical recording medium-manufacturing apparatus for forming the resin layer according to the method of manufacturing an optical recording medium as claimed in any one of claims 1 to 16,
the optical recording medium-manufacturing apparatus comprising a turntable on which the substrate is placed; a central chuck which has a diameter smaller than a diameter of the central mounting hole of the substrate and is expanded by supply of air during chucking, to close the central mounting hole; an air supply section that supplies air to said central chuck; a coating liquid-dropping section which drops the coating liquid for forming the resin layer; and a control section which controls driving of said air supply section and said coating liquid-dropping section.

18. An optical recording medium-manufacturing apparatus as claimed in claim 17, wherein said central chuck is made of a material whose surface has water repellency or oil repellency.

19. An optical recording medium-manufacturing apparatus as claimed in claim 17, comprising punching means for punching the central mounting hole through a central portion of the formed resin layer.

20. An optical recording medium-manufacturing apparatus as claimed in claim 18, comprising punching means for punching the central mounting hole through a central portion of the formed resin layer.
